# EUROPEAN PATENT SPECIFICATION

(11) **EP 3 323 677 B1**
(45) Date of publication and mention of the grant of the patent: **18.03.2020**
(21) Application number: 16824270.9
(22) Date of filing: 29.06.2016
(51) Int. Cl.: B60R 1/072, B60R 1/06

(54) **VEHICLE VISUAL CONFIRMATION DEVICE**
VISUELLE BESTÄTIGUNGSVORRICHTUNG FÜR EIN FAHRZEUG
DISPOSITIF DE CONFIRMATION VISUELLE DE VÉHICULE

(30) Priority: 14.07.2015 JP 2015140645
(43) Date of publication of application: 23.05.2018
(73) Proprietor: Kabushiki Kaisha Tokai Rika Denki Seisakusho, Ohguchi-cho Niwa-gun Aichi 480-0195 (JP)
(72) Inventor: FUJISAKI, Suguru, Niwa-gun Aichi 480-0195 (JP); YOSHIDA, Shigeki, Niwa-gun Aichi 480-0195 (JP); SAKAMOTO, Masato, Niwa-gun Aichi 480-0195 (JP); OHASHI, Masatsugu, Niwa-gun Aichi 480-0195 (JP); MUTO, Hiroyuki, Niwa-gun Aichi 480-0195 (JP); YAMAMOTO, Nobuko, Niwa-gun Aichi 480-0195 (JP); ICHIKAWA, Takashi, Niwa-gun Aichi 480-0195 (JP)
(74) Representative: TBK
(86) International application number: PCT/JP2016/069288
(87) International publication number: WO 2017/010290

(56) References cited:
- EP-A2- 1 153 794
- JP-A- 2002 002 388
- JP-A- 2002 002 388
- JP-A- 2002 529 297
- JP-A- 2002 529 297
- JP-A- 2013 067 245
- JP-A- 2013 067 245
- JP-A- 2013 163 498
- JP-A- 2015 027 848
- US-B1- 6 347 872

## Description

### Technical Field

The present invention relates to a viewing device for a vehicle in which a viewing means assists viewing by a vehicle occupant.

### Background Art

In an electric door mirror described in JP 2013-67194 A, a motor holder of a mirror surface angle adjusting unit is fixed to a partitioning wall of a housing main body, and a mirror is assembled to a pivot plate of the mirror surface angle adjusting unit, and the housing main body accommodates the mirror surface angle adjusting unit and the mirror. Further, at the mirror surface angle adjusting unit, the motor holder covers the side of the motor which side is opposite the mirror.

JP 2002 002388 A discloses a vehicular door mirror device which is joined with a mirror surface angle adjusting device for holding a mirror by a holding part of the frame, and a support part of the frame is joined with a housing device fixed to the car body side so that the housing device supports the mirror. Here, since the holding part, the support part and a drawing part are formed by applying a drawing process to a frame molding metallic plate formed by press working, the frame can have the sufficient rigidity. Since the frame is molded by the frame molding metallic plate, a cost of the frame can be reduced.

Here, in such an electric door mirror, it is preferable to be able to improve the assemblability.

### SUMMARY OF INVENTION

### Technical Problem

In view of the above-described circumstances, an object of the present invention is to obtain a viewing device for a vehicle that can improve the assemblability.

### Solution to Problem

The object is solved by a viewing device according to claim 1. Advantageous developments are subject-matters of the dependent claims.

A viewing device for a vehicle of a first aspect of the present invention comprises:
viewing means for assisting viewing by a vehicle occupant; an operating mechanism that is operable to tilt the viewing means; an accommodating body that accommodates the viewing means; a covering portion that is provided at a side of the viewing means (38) of the accommodating body; and a reinforcing body that is fixed to an opposite side, from the viewing means, of the accommodating body, that reinforces the accommodating body, and that covers an opposite side, from the viewing means, of the operating mechanism such that the operating mechanism is held between the covering portion and the reinforcing body.

A viewing device for a vehicle of a second aspect of the present invention comprises, in the viewing device for a vehicle of the first aspect of the present invention, a retracting mechanism that is fixed to, and reinforced by, the reinforcing body, and that is operable to retract the viewing means.

A viewing device for a vehicle of a third aspect of the present invention comprises, in the viewing device for a vehicle of the second aspect of the present invention, a fit-together portion that is provided at the reinforcing body and is fitted together with the retracting mechanism.

In a viewing device for a vehicle of a fourth aspect of the present invention, in the viewing device for a vehicle of the third aspect of the present invention, the reinforcing body is fixed to the retracting mechanism at the fit-together portion.

A viewing device for a vehicle of a fifth aspect of the present invention comprises, in the viewing device for a vehicle of any one of the first aspect through the fourth aspect of the present invention, a step portion that is provided at the reinforcing body, and that forms, at the reinforcing body, a side of portion at the viewing means and a portion at an opposite side from the viewing means.

In a viewing device for a vehicle of a sixth aspect of the present invention, in the viewing device for a vehicle of the fifth aspect of the present invention, the reinforcing body is fixed to the accommodating body at the step portion.

A viewing device for a vehicle of a seventh aspect of the present invention comprises, in the viewing device for a vehicle of the fifth aspect or the sixth aspect of the present invention, an electric mechanism that is disposed further toward a side of the portion at the side of the viewing means than the step portion of the reinforcing body, and to which electric power is supplied.

A viewing device for a vehicle of an eighth aspect of the present invention comprises, in the viewing device for a vehicle of any one of the first aspect through the seventh aspect of the present invention, a moving member that is provided at the operating mechanism, and that is movable to tilt the viewing means, the reinforcing body being fixed to the accommodating body at a side of the moving member.

A viewing device for a vehicle of a ninth aspect of the present invention comprises, in the viewing device for a vehicle of any one of the first aspect through the eighth aspect of the present invention, a limiting portion that is provided at the accommodating body at a side of the operating mechanism, and that limits movement of the reinforcing body.

A viewing device for a vehicle of a tenth aspect of the present invention comprises, in the viewing device for a vehicle of any one of the first aspect through the ninth aspect of the present invention, a concave portion that is provided at at least one of the accommodating body or the reinforcing body at a periphery of the operating mechanism, and into which the accommodating body or the reinforcing body is inserted.

A viewing device for a vehicle of an eleventh aspect of the present invention comprises, in the viewing device for a vehicle of any one of the first aspect through the tenth aspect of the present invention, a wire that is provided at the reinforcing body and that supplies electric power.

A viewing device for a vehicle of a twelfth aspect of the present invention comprises, in the viewing device for a vehicle of the eleventh aspect of the present invention, an electric mechanism that is electrically connected to the wire and to which electric power is supplied.

A viewing device for a vehicle of a thirteenth aspect of the present invention comprises, in the viewing device for a vehicle of the eleventh aspect or the twelfth aspect of the present invention, an inhibiting portion that is provided at the reinforcing body so as to project outward, and that inhibits water from reaching an exposed portion of the wire, the exposed portion being exposed from the reinforcing body.

In a viewing device for a vehicle of a fourteenth aspect of the present invention, in the viewing device for a vehicle of the thirteenth aspect of the present invention, the inhibiting portion is disposed between exposed portions of the wire, the exposed portions being exposed from the reinforcing body.

### Advantageous Effects of Invention

In the viewing device for a vehicle of the first aspect of the present invention, the accommodating body accommodates the viewing means, and the viewing means assists viewing by the vehicle occupant. Moreover, the viewing means is tilted due to the operating mechanism being operated. Further, the reinforcing body is fixed to the opposite side, from the viewing means, of the accommodating body, and the reinforcing body reinforces the accommodating body.

Here, the reinforcing body covers the opposite side, from the viewing means, of the operating mechanism. Therefore, in a state in which the reinforcing body is not fixed to the opposite side, from the viewing means, of the accommodating body, the operating mechanism can be assembled from the opposite side, from the viewing means, of the accommodating body, and the assemblability can be improved.

In the viewing device for a vehicle of the second aspect of the present invention, the viewing means is retracted due to the retracting mechanism being operated.

Here, the retracting mechanism is fixed to the reinforcing body, and the retracting mechanism is reinforced. Therefore, the supporting rigidity of the viewing means by the retracting mechanism can be increased.

In the viewing device for a vehicle of the third aspect of the present invention, the fit-together portion is provided at the reinforcing body, and the fit-together portion is fitted together with the retracting mechanism. Therefore, the retracting mechanism can be reinforced effectively.

In the viewing device for a vehicle of the fourth aspect of the present invention, the reinforcing body is fixed to the retracting mechanism at the fit-together portion. Therefore, the retracting mechanism can be reinforced more effectively.

In the viewing device for a vehicle of the fifth aspect of the present invention, the step portion is provided at the reinforcing body. The portion, which is at the side of the viewing means, and the portion, which is at the opposite side from the viewing means, are formed at the reinforcing body by the step portion. Therefore, the rigidity of the reinforcing body can be increased by the step portion.

In the viewing device for a vehicle of the sixth aspect of the present invention, the reinforcing body is fixed to the accommodating body at the step portion. Therefore, the reinforcing body can effectively reinforce the accommodating body.

In the viewing device for a vehicle of the seventh aspect of the present invention, electric power is supplied to the electric mechanism.

Here, the electric mechanism is disposed further toward the side of the portion at the side of the viewing means than the step portion of the reinforcing body. Therefore, the need to separately provide space for placement of the electric mechanism can be eliminated, and the viewing device for a vehicle can be made to be compact.

In the viewing device for a vehicle of the eighth aspect of the present invention, the moving member is provided at the operating mechanism, and the viewing means is tilted due to the moving member being moved.

Here, the reinforcing body is fixed to the accommodating body at the side of the moving member. Therefore, the reinforcing body can effectively support the moving member.

In the viewing device for a vehicle of the ninth aspect of the present invention, the limiting portion is provided at the accommodating body at the side of the operating mechanism, and the limiting portion limits movement of the reinforcing body. Therefore, the reinforcing body can effectively support the operating mechanism.

In the viewing device for a vehicle of the tenth aspect of the present invention, the concave portion is provided at at least one of the accommodating body or the reinforcing body, at the periphery of the operating mechanism. The accommodating body or the reinforcing body is inserted in the concave portion. Therefore, the path, along which foreign substances reach the operating mechanism from the outer side of the reinforcing body,
can be made to be long, and foreign substances reaching the operating mechanism can be suppressed.

In the viewing device for a vehicle of the eleventh aspect of the present invention, the wire that supplies electric power is provided at the reinforcing body. Therefore, disconnection of the wire can be suppressed.

In the viewing device for a vehicle of the twelfth aspect of the present invention, electric power is supplied to the electric mechanism.

Here, the electric mechanism is electrically connected to the wire of the reinforcing body. Therefore, the need to route wires that are bodies separate from the reinforcing body can be eliminated.

In the viewing device for a vehicle of the thirteenth aspect of the present invention, the inhibiting portion provided at the reinforcing body so as to project outward. The inhibiting portion inhibits water from reaching the exposed portion, which is exposed from the reinforcing body, of the wire. Therefore, the wire can be protected.

In the viewing device for a vehicle of the fourteenth aspect of the present invention, the inhibiting portion is disposed between the exposed portions, which are exposed from the reinforcing body, of the wire. Therefore, the exposed portions, which are exposed from the reinforcing body, of the wire becoming electrically connected can be suppressed.

### BRIEF DESCRIPTION OF DRAWINGS

Fig. 1 is an exploded perspective view that is seen from a vehicle front side and a vehicle transverse direction inner side and shows a door mirror device for a vehicle relating to a first embodiment of the present invention.
Fig. 2 is a cross-sectional view that is seen from a vehicle transverse direction outer side and shows main portions of the door mirror device for a vehicle relating to the first embodiment of the present invention.
Fig. 3 is a perspective view that is seen from a vehicle rear side and the vehicle transverse direction inner side and shows a visor body of the door mirror device for a vehicle relating to the first embodiment of the present invention.
Fig. 4 is a perspective view that is seen from the vehicle front side and an upper side and shows a reinforcement, a turn lamp, and an illuminating lamp of the door mirror device for a vehicle relating to the first embodiment of the present invention.
Fig. 5 is a perspective view that is seen from the vehicle front side and the vehicle transverse direction outer side and shows the reinforcement of the door mirror device for a vehicle relating to the first embodiment of the present invention.
Fig. 6 is a perspective view that is seen from the vehicle rear side and the vehicle transverse direction inner side and shows the reinforcement of the door mirror device for a vehicle relating to the first embodiment of the present invention.
Fig. 7A is a perspective view that is seen from the vehicle front side and the vehicle transverse direction outer side and shows a state before conductor formation of the reinforcement of a door mirror device for a vehicle relating to a second embodiment of the present invention.
Fig. 7B is a perspective view that is seen from the vehicle front side and the vehicle transverse direction outer side and shows a state in which the conductor of the reinforcement of the door mirror device for a vehicle relating to the second embodiment of the present invention has been formed.
Fig. 8A is a perspective view that is seen from the vehicle front side and the vehicle transverse direction outer side and shows a state in which external lead wires of the reinforcement of the door mirror device for a vehicle relating to the second embodiment of the present invention have been formed.
Fig. 8B is a perspective view that is seen from the vehicle front side and the vehicle transverse direction outer side and shows the reinforcement of the door mirror device for a vehicle relating to the second embodiment of the present invention.

### DESCRIPTION OF EMBODIMENTS

### [First Embodiment]

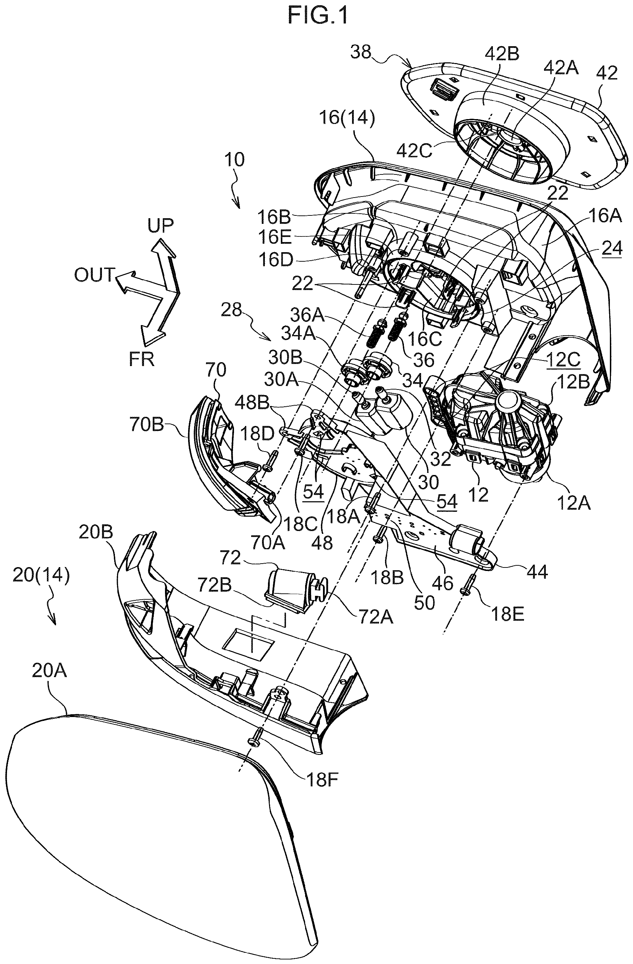

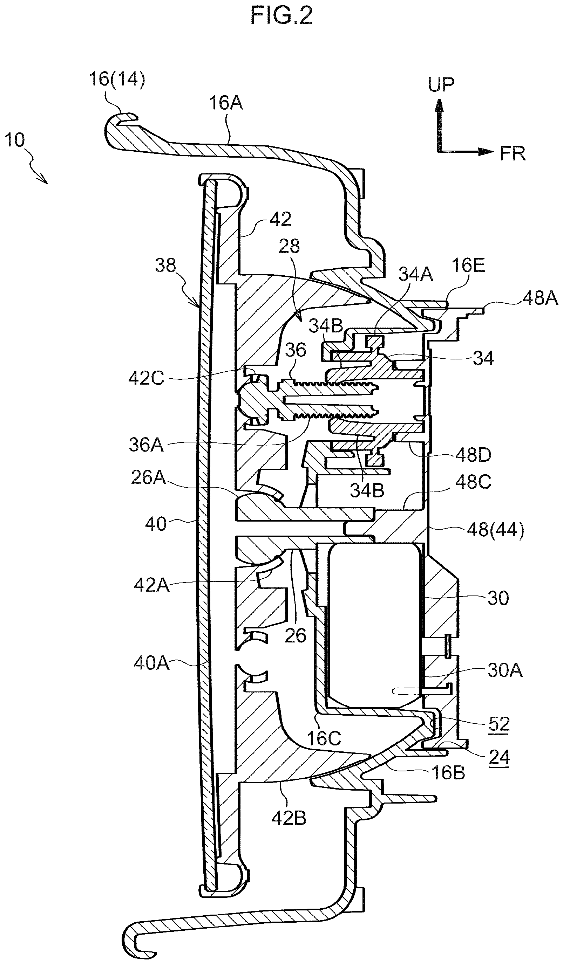

A door mirror device 10 for a vehicle that serves as a viewing device for a vehicle relating to a first embodiment of the present invention is shown in Fig. 1 in an exploded perspective view that is seen from the vehicle front side and the vehicle transverse direction inner side (the vehicle left side). Main portions of the door mirror device 10 for a vehicle are shown in Fig. 2 in a cross-sectional view that is seen from the vehicle transverse direction outer side (the vehicle right side). Note that, in the drawings, the vehicle front side is indicated by arrow FR, the vehicle transverse direction outer side is indicated by arrow OUT, and the upper side is indicated by arrow UP.

The door mirror device 10 for a vehicle relating to the present embodiment is supported at the outer side of a door (a front side door, a vehicle body side) of a vehicle.

As shown in Fig. 1, the door mirror device 10 for a vehicle has a retracting mechanism 12. A stand 12A that serves as a supporting member is provided at the retracting mechanism 12. The door mirror device 10 for a vehicle is supported at the door due to the stand 12A being supported at the vehicle front side end of the vertical direction intermediate portion of the door. A rotating body 12B is supported at the stand 12A. The rotating body 12B is rotated around the vertical direction with respect to the stand 12A, due to the retracting mechanism 12 being operated electrically. The rotating body 12B is electrically connected via the stand 12A interior to a control device (not illustrated) that is at the vehicle body side, and the retracting mechanism 12 is electrically operated by control of the control device.

A pair of fit-together concave portions 12C, which are cylindrical and serve as portions that are fitted together with, are provided at the vehicle transverse direction outer side end portion of the rotating body 12B. The pair of fit-together concave portions 12C are lined-up in the vertical direction. The fit-together concave portions 12C open toward the vehicle front side. Bottom walls (not illustrated) of the fit-together concave portions 12C are formed in shapes of annular plates (or may be cylindrical), and the central portions open to the vehicle longitudinal direction both sides.

A visor 14, which is made of resin and serves as an outer peripheral body, is supported at the rotating body 12B of the retracting mechanism 12. A visor body 16 that serves as an accommodating body is provided at the visor 14. The rotating body 12B is fixed to the vehicle front side of the vehicle transverse direction inner side end portion of the visor body 16 by fastening of a first screw 18A and a second screw 18B that serve as assembly members, or the like. The first screw 18A fixes the fit-together concave portion 12C that is at the upper side of the rotating body 12B to the visor body 16, and the second screw 18B fixes the fit-together concave portion 12C that is at the lower side of the rotating body 12B to the visor body 16. A visor cover 20 that is shaped as a curved plate and serves as a covering member is assembled via a reinforcement 44 that is described hereinafter to the vehicle front side of the visor body 16. The outer periphery of the visor cover 20 is fitted together with the outer periphery of the visor body 16, and the visor cover 20 covers the vehicle front side of the visor body 16. An upper cover 20A that is at the upper side and a lower cover 20B that is at the lower side are provided at the visor cover 20. The visor cover 20 is structured by the upper cover 20A and the lower cover 20B being assembled together.

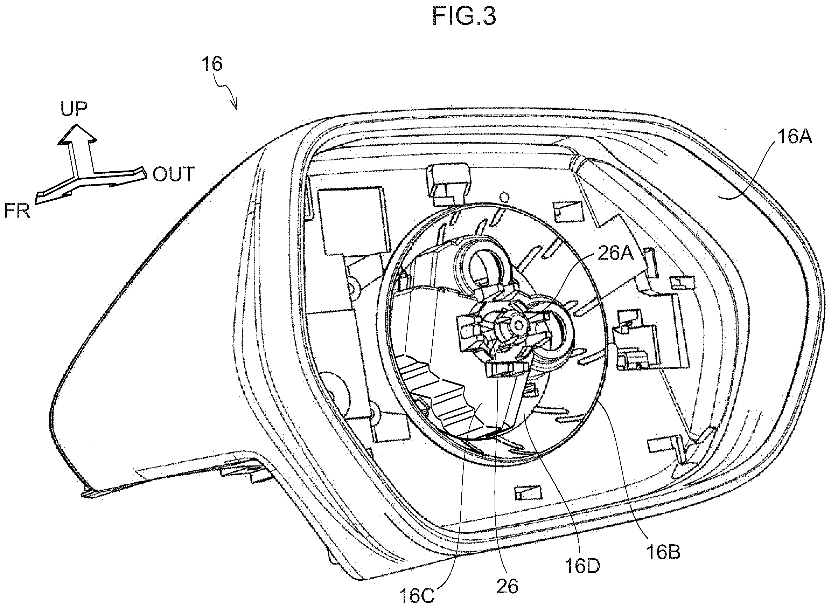

As shown in Fig. 1 through Fig. 3, an accommodating wall 16A, which is substantially shaped as a parallelepiped box and serves as an accommodating portion, is provided at the visor body 16. The interior of the accommodating wall 16A opens to the vehicle rear side.

A supporting wall 16B (a case lower portion) that serves as a supporting portion is provided integrally with the vehicle front side wall (the bottom wall) of the accommodating wall 16A. The supporting wall 16B projects out toward the vehicle front side and the vehicle rear side of the vehicle front side wall of the accommodating wall 16A. The supporting wall 16B is substantially tubular, and the central axis of the supporting wall 16B is disposed parallel to the vehicle longitudinal direction. The supporting wall 16B is shaped as a spherical wall. The inner diameter dimension of the supporting wall 16B gradually increases toward the vehicle rear side.

A covering wall 16C (a case upper portion) that is shaped as a container and serves as a covering portion is provided at the interior of the supporting wall 16B. The entire periphery of the vehicle front side end of the covering wall 16C is made integral with the entire periphery of the vehicle front side end of the supporting wall 16B. A connecting wall 16D that is shaped as a flat plate is provided integrally between the vehicle front side end of the covering wall 16C and the vehicle front side end of the supporting wall 16B. The connecting wall 16D connects the vehicle front side end of the covering wall 16C and the vehicle front side end of the supporting wall 16B at the portion where the vehicle front side end of the covering wall 16C and the vehicle front side end of the supporting wall 16B are not directly made integral. The interior of the covering wall 16C opens to the vehicle front side of the supporting wall 16B, and, due thereto, the interior of the covering wall 16C opens to the vehicle front side of the accommodating wall 16A.

A predetermined number (four in the present embodiment) of limiting plates 22, which are shaped as rectangular plates and serve as limiting portions, are provided integrally with the connecting wall 16D. The limiting plates 22 project out toward the vehicle front side from the connecting wall 16D. The predetermined number of limiting plates 22 are disposed at a substantially uniform interval in the peripheral direction of the supporting wall 16B. The limiting plates 22 are disposed so as to intersect the radial direction of the supporting wall 16B.

A fit-together tube 16E that is cylindrical and serves as a peripheral portion is provided integrally with the outer peripheral surface of the supporting wall 16B at the vehicle longitudinal direction intermediate portion. The fit-together tube 16E projects out toward the vehicle front side from the supporting wall 16B, and is disposed coaxially with the supporting wall 16B. An outer concave portion 24, which is substantially trapezoidal in cross-section and serves as a concave portion, is formed between the vehicle front side portion of the supporting wall 16B and the fit-together tube 16E. The outer concave portion 24 opens to the vehicle front side.

A holding tube 26, which is substantially cylindrical and serves as a central supporting portion (a holding portion), is provided integrally with the vehicle rear side wall (the bottom wall) of the covering wall 16C. The holding tube 26 projects out toward the vehicle front side and the vehicle rear side of the vehicle rear side wall of the covering wall 16C, and is disposed coaxially with the supporting wall 16B. A holding sphere 26A that is substantially spherical is provided at the vehicle rear side end portion of the holding tube 26. The peripheral surfaces at the vehicle front side portion and the vehicle rear side portion of the holding sphere 26A are shaped as spherical surfaces, and the centers thereof coincide with the center of the inner peripheral surface of the supporting wall 16B.

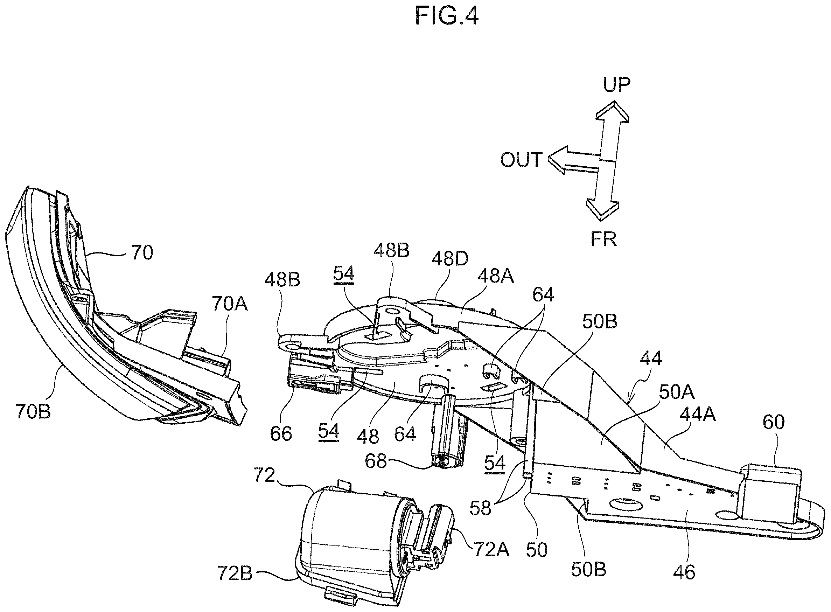

The reinforcement 44 (refer to Fig. 4 through Fig. 6), which is shaped as an elongated plate and is substantially made of resin and serves as a reinforcing body (a rigid member), is provided at the vehicle front side of the visor body 16 and the rotating body 12B of the retracting mechanism 12. A reinforcing plate 46, which is shaped as a substantially triangular plate and serves as a reinforcing portion, is provided integrally with the vehicle transverse direction inner side portion of the reinforcement 44. A bottom wall portion 48, which is substantially disc-shaped and serves as a closing-off portion, is provided at the vehicle transverse direction outer side portion of the reinforcement 44. A step portion 50 is provided at the vehicle transverse direction intermediate portion of the reinforcement 44. The bottom wall portion 48 is disposed at the vehicle rear side with respect to the reinforcing plate 46 due to the step portion 50 connecting the reinforcing plate 46 and the bottom wall portion 48.

A reinforcing peripheral wall 44A that is shaped as an elongated plate is provided at the peripheral portion of the reinforcement 44 at the portions of the reinforcing plate 46 and the step portion 50. The reinforcing peripheral wall 44A is disposed orthogonally with respect to the inner side portions of the reinforcing plate 46 and the step portion 50, and projects out toward the vehicle longitudinal direction both sides, and increases the rigidity of the reinforcing plate 46 and the step portion 50. A fit-together peripheral wall 48A that is cylindrical is provided at the peripheral portion of the bottom wall portion 48 at the entire periphery thereof. The fit-together peripheral wall 48A is disposed orthogonally to the inner side portion of the bottom wall portion 48, and projects out toward the vehicle longitudinal direction both sides, and increases the rigidity of the bottom wall portion 48.

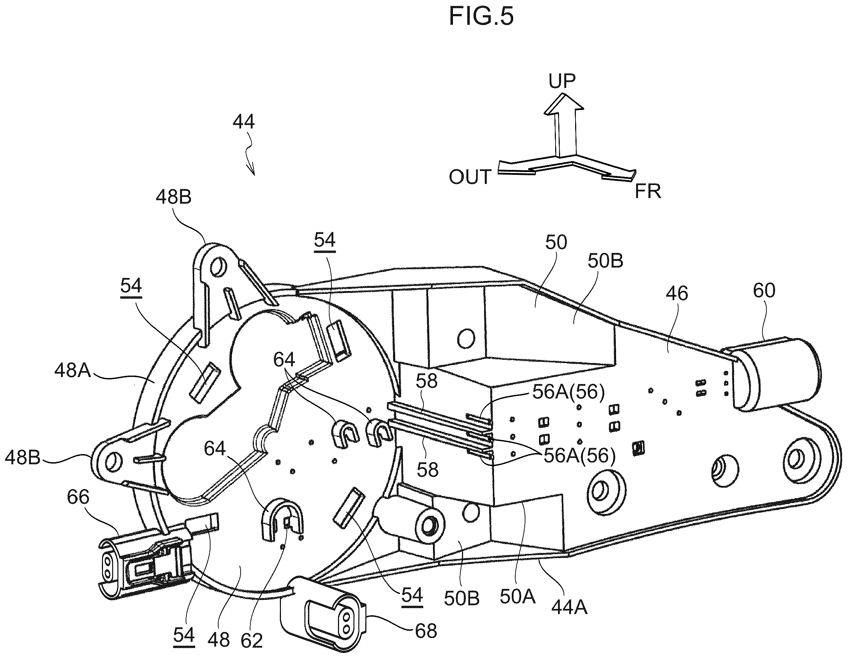

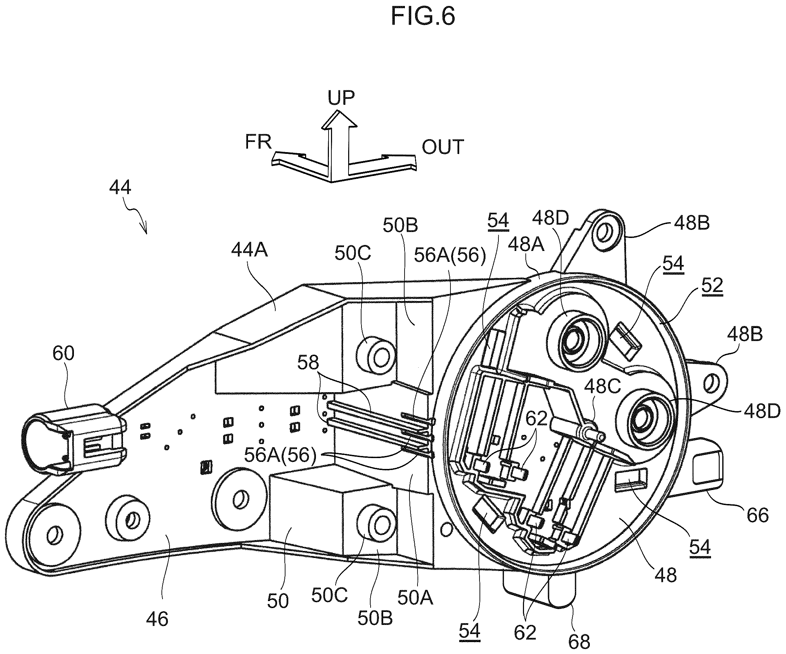

An intermediate step portion 50A (refer to Fig. 5 and Fig. 6) that is substantially shaped as a triangular pillar-shaped box is provided at the vertical direction intermediate portion of the step portion 50. The interior of the intermediate step portion 50A opens to the vehicle rear side and the vehicle transverse direction inner side. The vehicle transverse direction inner side wall of the intermediate step portion 50A is disposed orthogonally to the vehicle longitudinal direction. The vehicle transverse direction outer side wall of the intermediate step portion 50A is disposed orthogonally to the vehicle transverse direction. The vehicle transverse direction outer side wall of the intermediate step portion 50A is disposed at the vehicle rear side with respect to the vehicle transverse direction inner side wall of the intermediate step portion 50A. Further, the top wall and the bottom wall of the intermediate step portion 50A are disposed orthogonally to the vertical direction.

End step portions 50B (refer to Fig. 5 and Fig. 6) that are shaped as bent plates are provided at the upper portion and the lower portion of the step portion 50. The end step portions 50B are connected to the intermediate step portion 50A. The vehicle transverse direction inner side walls of the end step portions 50B extend in a direction of heading toward the vehicle rear side while heading toward the vehicle transverse direction outer side. The vehicle transverse direction intermediate walls of the end step portions 50B are disposed orthogonally to the vehicle longitudinal direction. The vehicle transverse direction intermediate walls of the end step portions 50B are disposed at the vehicle rear side with respect to the vehicle transverse direction inner side walls of the end step portions 50B. The vehicle transverse direction outer side walls of the end step portions 50B are disposed orthogonally to the vehicle transverse direction. The vehicle transverse direction outer side walls of the end step portions 50B are disposed at the vehicle rear side with respect to the vehicle transverse direction intermediate walls of the end step portions 50B. A fit-together convex portion 50C (refer to Fig. 6) that is cylindrical and serves as a fit-together portion is provided at each of the end step portions 50B. The fit-together convex portions 50C project out toward the vehicle rear side, and the interiors thereof open to the vehicle longitudinal direction both sides.

At the pair of end step portions 50B, the reinforcement 44 is fixed, together with the rotating body 12B of the retracting mechanism 12, to the visor body 16 by the fastening of the first screw 18A and the second screw 18B, respectively. The first screw 18A is passed through the interior of the fit-together convex portion 50C of the end step portion 50B that is at the upper side and through the interior of the bottom wall of the fit-together concave portion 12C that is at the upper side of the rotating body 12B, and this fit-together convex portion 50C is fitted together with the interior of this fit-together concave portion 12C, and the bottom wall of this fit-together concave portion 12C is nipped between this fit-together convex portion 50C and the visor body 16. The second screw 18B is passed through the interior of the fit-together convex portion 50C of the end step portion 50B that is at the lower side and through the interior of the bottom wall of the fit-together concave portion 12C that is at the lower side of the rotating body 12B, and this fit-together convex portion 50C is fitted together with the interior of this fit-together concave portion 12C, and the bottom wall of this fit-together concave portion 12C is nipped between this fit-together convex portion 50C and the visor body 16.

A pair of assembly plates 48B, which are shaped as triangular plates and serve as assembly portions, are provided integrally with the vehicle transverse direction outer side portion of the bottom wall portion 48. The pair of assembly plates 48B project out from the bottom wall portion 48 toward the upper side and the vehicle transverse direction outer side, respectively. At the pair of assembly plates 48B, the reinforcement 44 is fixed to the visor body 16 by the fastening of a third screw 18C and a fourth screw 18D that serve as assembly members, respectively. At the vehicle transverse direction inner side end portion of the reinforcing plate 46, the reinforcement 44 is fixed to the rotating body 12B of the retracting mechanism 12 by the fastening of a fifth screw 18E that serves as an assembly member.

The rigidity of the reinforcement 44 is high as compared with the visor body 16, and the reinforcement 44 reinforces the visor body 16 and the rotating body 12B. Further, the visor cover 20 (the lower cover 20B) of the visor 14 is fixed to the reinforcement 44, at the vehicle transverse direction inner side wall of the intermediate step portion 50A, by the fastening of a sixth screw 18F that serves as a fixing member. Due thereto, the above-described visor cover 20 is assembled to the visor body 16 via the reinforcement 44.

An inner concave portion 52 (refer to Fig. 2 and Fig. 6), which is rectangular in cross-section and serves as a concave portion, is formed at the vehicle rear side surface of the bottom wall portion 48 over the entire periphery thereof. The inner concave portion 52 is disposed at the radial direction inner side of the fit-together peripheral wall 48A of the bottom wall portion 48. The vehicle rear side portion of the fit-together peripheral wall 48A is inserted in the outer concave portion 24 of the visor body 16, and the vehicle front side end of the supporting wall 16B of the visor body 16 is inserted in the inner concave portion 52, and the outer peripheral surface of the fit-together peripheral wall 48A is fitted together with the interior of the fit-together tube 16E of the visor body 16, and the outer peripheral surface of the supporting wall 16B is fitted together with the outer peripheral surface of the inner concave portion 52 (the inner peripheral surface of the fit-together peripheral wall 48A). Due thereto, the bottom wall portion 48 covers and closes-off the vehicle front sides of the supporting wall 16B, the covering wall 16C and the connecting wall 16D of the visor body 16, and reinforces the supporting wall 16B, the covering wall 16C and the connecting wall 16D.

A predetermined number (four in the present embodiment) of limiting holes 54 that are rectangular and serve as limited portions are formed so as to pass-through the bottom wall portion 48. The predetermined number of limiting holes 54 are disposed at a substantially uniform interval in the peripheral direction of the bottom wall portion 48, and are respectively disposed so as to intersect the radial direction of the bottom wall portion 48. The limiting plates 22 of the visor body 16 are inserted-in (fitted together with) the limiting holes 54. Due thereto, movement of the bottom wall portion 48 in the peripheral direction and the radial direction with respect to the visor body 16 is limited.

A fit-in pillar 48C that is substantially cylindrical and serves as a fit-in portion is provided integrally with the central portion of the bottom wall portion 48. The fit-in pillar 48C projects out toward the vehicle rear side from the bottom wall portion 48, and is disposed coaxially with the bottom wall portion 48. The distal end portion of the fit-in pillar 48C has a reduced diameter, and the distal end portion of the fit-in pillar 48C is fit-in the interior of the holding tube 26 of the visor body 16 from the vehicle front side, and the fit-in pillar 48C reinforces the holding tube 26.

Supporting tubes 48D that are cylindrical are provided integrally with the upper portion and the vehicle transverse direction outer side portion of the bottom wall portion 48, at the bottom wall portion 48 radial direction inner sides of the assembly plates 48B. The supporting tubes 48D project out toward the vehicle rear side from the bottom wall portion 48, and the central axes thereof are disposed parallel to that of the bottom wall portion 48.

Plural lead wires 56 (refer to Fig. 5 and Fig. 6), which are shaped as elongated, narrow strips and structure wires, are made integral with the reinforcement 44 by insert molding. The lead wires 56 extend from the reinforcing plate 46 via the step portion 50 to the bottom wall portion 48 in a state in which substantially the entire lead wires 56 are disposed at the interior of the reinforcement 44. At the vehicle front side end portion and the vehicle rear side end portion of the vehicle transverse direction outer side wall of the intermediate step portion 50A, the plural lead wires 56 are exposed from the intermediate step portion 50A (hereinafter, these exposed portions of the lead wires 56 are called "exposed portions 56A"). The exposed portions 56A that are at the vehicle front side are exposed at the vehicle transverse direction outer side of the intermediate step portion 50A in a state of extending in the vehicle longitudinal direction. The exposed portions 56A that are at the vehicle rear side are exposed at the vehicle transverse direction inner side of the intermediate step portion 50A in a state of extending in the vehicle longitudinal direction.

A predetermined number of partitioning walls 58, which are shaped as elongated plates and serve as inhibiting portions, are provided integrally with the vehicle transverse direction inner side surface and the vehicle transverse direction outer side surface, respectively, of the vehicle transverse direction outer side wall of the intermediate step portion 50A. The partitioning walls 58 extend in the vehicle longitudinal direction, and are disposed between the exposed portions 56A of the lead wires 56.

A main connector 60 (bracket) that serves as a receiving portion is provided integrally with the reinforcing plate 46. The main connector 60 is electrically connected to the respective lead wires 56, and is electrically connected to a control device via the interior of the rotating body 12B and the interior of the stand 12A of the retracting mechanism 12.

Pairs of terminals 62 (refer to Fig. 6) that structure wires are provided by insert molding at the lower portion and the vehicle transverse direction inner side portion of the bottom wall portion 48, respectively. The terminals 62 project out toward the vehicle rear side from the bottom wall portion 48, and are exposed at the vehicle rear side and the vehicle front side of the bottom wall portion 48.

Suppressing walls 64 (refer to Fig. 4 and Fig. 5), which are shaped as upside-down U-shaped plates in cross-section and which serve as inhibiting portions, are provided integrally with the vehicle front side surface of the lower portion and the vehicle transverse direction inner side portion of the bottom wall portion 48, respectively. The suppressing walls 64 project out toward the vehicle front side from the bottom wall portion 48, and cover the upper sides and the vehicle transverse direction both sides of the exposed portions of the terminals 62 which exposed portions are exposed from the bottom wall portion 48.

A first output connector 66 (refer to Fig. 4 through Fig. 6) that serves as a supply portion is provided integrally with the vehicle transverse direction outer side portion of the bottom wall portion 48. The first output connector 66 is electrically connected to the pair of lead wires 56, and projects out from the bottom wall portion 48 toward the vehicle transverse direction outer side.

A second output connector 68 (refer to Fig. 4 through Fig. 6) that serves as a supply portion is provided integrally with the lower end of the bottom wall portion 48. The second output connector 68 is electrically connected to the pair of lead wires 56, and projects out from the bottom wall portion 48 toward the vehicle front side.

A mirror surface adjusting mechanism 28 that serves as an operating mechanism is held between the covering wall 16C of the visor body 16 and the bottom wall portion 48 of the reinforcement 44.

Motors 30 that serve as driving means are provided at the mirror surface adjusting mechanism 28 at respective positions at the lower portion and the vehicle transverse direction inner side portion of the bottom wall portion 48. Main body portions 30A of the motors 30 are held in states of being nipped between the covering wall 16C and the bottom wall portion 48. Output shafts 30B extend-out from the main body portions 30A. Worms 32 that serve as output members are fixed to the output shafts 30B. The pairs of terminals 62 of the reinforcement 44 are electrically connected to the main body portions 30A. Due to control of a control device, electric power is supplied to the motors 30, and the motors 30 are driven, and mirror surface adjusting mechanism 28 is thereby electrically operated.

A pair of wheel drives 34, which are substantially cylindrical and are made of resin and serve as transmitting members, are provided at the mirror surface adjusting mechanism 28. The wheel drives 34 are nipped between the covering wall 16C and the bottom wall portion 48 in a state in which the vehicle front side portions thereof are fit-in the interiors of the supporting tubes 48D of the bottom wall portion 48, and are held so as to rotate freely around the axes thereof.

Worm wheels 34A are formed coaxially at the outer peripheral portions of the wheel drives 34 at the axial direction (vehicle longitudinal direction) intermediate portions thereof. The worm wheels 34A are meshed-together with (are engaged with) the worms 32 of the motors 30. Therefore, due to the motors 30 being driven and the worms 32 being rotated, the worm wheels 34A are rotated, and the wheel drives 34 are rotated.

A predetermined number (four in the present embodiment) of meshing claws 34B that serve as engaging portions are formed at the inner peripheral portions of the wheel drives 34 at the vehicle rear sides of the worm wheels 34A. The predetermined number of meshing claws 34B are disposed at uniform intervals in the peripheral directions of the wheel drives 34. The meshing claws 34B extend-out toward the vehicle rear side and are elastic. The distal ends (the vehicle rear side ends) of the meshing claws 34B project out toward the radial direction inner sides of the wheel drives 34.

Rod drives 36 that are substantially cylindrical and serve as moving members are inserted coaxially within the wheel drives 34. The rod drives 36 project out toward the vehicle rear side from the covering wall 16C. One of the rod drives 36 is disposed above (or below) the central axis of the supporting wall 16B of the visor body 16, and the other rod drive 36 is disposed at the vehicle transverse direction outer side (or the vehicle transverse direction inner side) of the central axis of the supporting wall 16B.

The portions other than the distal end portions (the vehicle rear side end portions) of the rod drives 36 are made to be screws 36A. Distal ends of the meshing claws 34B of the wheel drives 34 are meshed-together with (are engaged with) the screws 36A. The distal end portions of the rod drives 36 are substantially spherical.

A mirror body 38 that serves as a viewing means is accommodated within the accommodating wall 16A of the visor body 16. The entire periphery of and the vehicle front side of the mirror body 38 are covered by the accommodating wall 16A.

A mirror 40 that is shaped as a substantially rectangular plate and serves as a viewing portion is provided at the vehicle rear side portion of the mirror body 38. The obverse of the mirror 40 is exposed at the vehicle rear side of the visor body 16. A mirror surface 40A (the obverse of a reflecting layer at the reverse side) of the mirror 40 faces toward the vehicle rear side. Viewing of the vehicle rear side by a vehicle occupant of the vehicle (the driver in particular) is assisted by the mirror 40.

A mirror holder 42, which is substantially rectangular plate shaped and is made of resin and serves as a sliding body, is provided at the vehicle front side portion of the mirror body 38. The entire periphery of the mirror 40 is fixed to (held at) the entire periphery of the mirror holder 42, and the mirror holder 42 covers the vehicle front side (the reverse side) of the mirror 40.

A mounting wall 42A that is substantially tubular and serves as a mounting portion is formed at the mirror holder 42 at the vehicle front side of the central position (the center of gravity position) of the mirror 40. The mounting wall 42A is disposed coaxially with the supporting wall 16B of the visor body 16. The mounting wall 42A is substantially shaped as a spherical wall, and the inner diameter dimension of the mounting wall 42A gradually becomes larger toward the vehicle rear side. The holding sphere 26A of the holding tube 26 of the visor body 16 is fit-in the interior of the mounting wall 42A. Due thereto, the mounting wall 42A is held tiltably and slidably at the holding sphere 26A.

A sliding wall 42B that is substantially tubular and serves as a sliding portion is provided integrally with the vehicle front side of the mirror holder 42. The sliding wall 42B is disposed coaxially with the supporting wall 16B of the visor body 16. The sliding wall 42B is shaped as a spherical wall, and the outer diameter dimension of the sliding wall 42B gradually becomes larger toward the vehicle rear side. The outer peripheral surface of the sliding wall 42B abuts the inner peripheral surface of the supporting wall 16B. The sliding wall 42B is tiltably and slidably supported at the inner peripheral surface of the supporting wall 16B.

A pair of rotating walls 42C that are substantially tubular and serve as rotating portions are formed at the mirror holder 42 at the radial direction inner side of the sliding wall 42B. One of the rotating walls 42C is disposed above (or below) the central axis of the supporting wall 16B of the visor body 16. The other rotating wall 42C is disposed at the vehicle transverse direction outer side (or the vehicle transverse direction inner side) of the central axis of the supporting wall 16B. The central axes of the rotating walls 42C are disposed parallel to the central axis of the supporting wall 16B of the visor body 16, and the rotating walls 42C are substantially shaped as spherical walls. The inner diameter dimensions of the rotating walls 42C gradually become larger from the vehicle longitudinal direction both end sides toward the vehicle longitudinal direction central sides thereof.

The distal end portions of the rod drives 36 at the mirror surface adjusting mechanism 28 are fit into and held within the rotating walls 42C. The rotating walls 42C permit rotation with respect to the distal end portions of the rod drives 36, and regulate rotation around the axes of the rod drives 36. Therefore, as described above, at the mirror surface adjusting mechanism 28, due to the wheel drives 34 (including the meshing claws 34B) being rotated, the meshed-together positions of the distal ends of the meshing claws 34B with the screws 36A of the rod drives 36 are displaced, and the rod drives 36 are moved (slid) in the vehicle longitudinal direction (the axial directions).

A turn lamp 70 (refer to Fig. 4) that serves as an electric mechanism is held at the vehicle transverse direction outer side portion of the lower cover 20B of the visor cover 20, between the visor cover 20 and the visor body 16. A first input connector 70A is provided integrally with the vehicle transverse direction inner side end portion of the turn lamp 70. The first input connector 70A is attached to the first output connector 66 of the reinforcement 44. Due thereto, the turn lamp 70 is held by the reinforcement 44. The first input connector 70A is electrically connected to the first output connector 66. Due to control of a control device, electric power is supplied to the turn lamp 70, and the turn lamp 70 is electrically operated. An irradiating portion 70B that serves as an emitting portion is provided at the vehicle front side portion of the turn lamp 70. The irradiating portion 70B is exposed at the exterior of the lower cover 20B. Due thereto, due to the turn lamp 70 being electrically operated, light is irradiated (emitted) from the irradiating portion 70B toward the vehicle transverse direction outer side and the vehicle front side.

An illuminating lamp 72 (refer to Fig. 4) that serves as an electric mechanism is held at the vehicle transverse direction intermediate portion of the lower cover 20B at the upper side thereof. A second input connector 72A is provided integrally with the vehicle transverse direction inner side end portion of the illuminating lamp 72. The second input connector 72A is attached to the second output connector 68 of the reinforcement 44, and, due thereto, the illuminating lamp 72 is held by the reinforcement 44. The second input connector 72A is electrically connected to the second output connector 68. Due to control of a control device, electric power is supplied to the illuminating lamp 72, and the illuminating lamp 72 is electrically operated. An illuminating portion 72B that serves as an emitting portion is provided at the lower end portion of the illuminating lamp 72. The illuminating portion 72B is exposed at the exterior of the lower cover 20B. Due thereto, due to the illuminating lamp 72 being electrically operated, light is irradiated (emitted) from the illuminating lamp 72B toward the lower side.

Operation of the present embodiment is described next.

In the door mirror device 10 for a vehicle that has the above-described structure, due to the retracting mechanism 12 being operated electrically, the rotating body 12B is rotated with respect to the stand 12A, and the mirror body 38 (including the visor 14 (the visor body 16 and the visor cover 20), the reinforcement 44, the mirror surface adjusting mechanism 28, the turn lamp 70 and the illuminating lamp 72) is rotated integrally with the rotating body 12B. Due thereto, the mirror body 38 is retracted due to the mirror body 38 being rotated toward the vehicle rear side and the vehicle transverse direction inner side. Moreover, the mirror body 38 is set erect (unfolded, returned) due to the mirror body 38 being rotated toward the vehicle front side and the vehicle transverse direction outer side.

Further, due to electrical operation of the mirror surface adjusting mechanism 28, the motors 30 are driven and the worms 32 are rotated, and, due thereto, the wheel drives 34 are rotated, and the rod drives 36 are moved in the vehicle longitudinal direction. Therefore, the mirror body 38 (the mirror 40 and the mirror holder 42) is tilted in at least one of the vertical direction and the vehicle transverse direction by the rod drives 36, and, due thereto, the angle of the mirror surface 40A of the mirror 40 (the viewing direction of the vehicle occupant that the mirror 40 assists) is adjusted in at least one of the vertical direction and the vehicle transverse direction. Further, at the time when the mirror body 38 is tilted, the mounting wall 42A of the mirror body 38 is held (supported) while being slid on the holding sphere 26A of the holding tube 26 of the visor body 16, and the sliding wall 42B of the mirror body 38 is supported while being slid on the supporting wall 16B of the visor body 16.

Moreover, due to the turn lamp 70 being electrically operated, light is irradiated from the irradiating portion 70B of the turn lamp 70 toward the vehicle transverse direction outer side and the vehicle front side. Moreover, due to the illuminating lamp 72 being electrically operated, light is irradiated from the illuminating portion 72B of the illuminating lamp 72 toward the lower side.

By the way, at the time of assembling the door mirror device 10 for a vehicle, the visor body 16 is moved from the vehicle front side with respect to the mirror body 38, and the mirror body 38 is accommodated within the accommodating wall 16A of the visor body 16. At this time, the holding sphere 26A of the visor body 16 is fit into the interior of the mounting wall 42A of the mirror holder 42 from the vehicle front side.

Moreover, the retracting mechanism 12 is assembled to (placed at) the visor body 16 from the vehicle front side.

Further, the mirror surface adjusting mechanism 28 (the motors 30, the worms 32, the wheel drives 34 and the rod drives 36) are assembled to (placed at) the covering wall 16C of the visor body 16 from the vehicle front side. At this time, the distal end portions of the rod drives 36 are fit into the interiors of the rotating walls 42C of the mirror holder 42 from the vehicle front side.

Next, the reinforcement 44 is assembled to the visor body 16 and the rotating body 12B from the vehicle front side by the first screw 18A, the second screw 18B, the third screw 18C, the fourth screw 18D and the fifth screw 18E. At this time, the distal end portion of the fit-in pillar 48C of the reinforcement 44 (the bottom wall portion 48) is fit into the interior of the holding tube 26 of the visor body 16 from the vehicle front side, and the terminals 62 of the reinforcement 44 (the bottom wall portion 48) are connected to the main body portions 30A of the motors 30 from the vehicle front side.

Further, the turn lamp 70 is assembled to the visor body 16 from the vehicle front side while the first input connector 70A of the turn lamp 70 is assembled to the first output connector 66 of the reinforcement 44. The second input connector 72A of the illuminating lamp 72 is assembled to the second output connector 68 of the reinforcement 44 from the vehicle front side.

Finally, the visor cover 20 (the upper cover 20A and the lower cover 20B) is assembled to the visor body 16 and the reinforcement 44 from the vehicle front side by the sixth screw 18F.

Here, the covering wall 16C interior opens toward the vehicle front side of the visor body 16 (the side opposite the mirror body 38), and the reinforcement 44 is assembled to the vehicle front side of the visor body 16, and the bottom wall portion 48 of the reinforcement 44 covers the vehicle front side of the mirror surface adjusting mechanism 28 that is at the covering wall 16C interior. Therefore, the mirror surface adjusting mechanism 28 can be assembled into the covering wall 16C interior from the vehicle front side of the visor body 16, in a state in which the reinforcement 44 is not assembled to the vehicle front side of the visor body 16.

Due thereto, the mirror surface adjusting mechanism 28 also can be assembled to the visor body 16 from the side at which the retracting mechanism 12, the reinforcement 44, the turn lamp 70, the illuminating lamp 72 and the visor cover 20 are assembled to the visor body 16 (the vehicle front side). Accordingly, differently than in a case in which the mirror surface adjusting mechanism 28 is assembled to the visor body 16 from the vehicle rear side (the mirror body 38 side), the number of assembly processes of the door mirror device 10 for a vehicle can be reduced, the assembly line for the door mirror device 10 for a vehicle can be simplified, the assemblability can be improved, and the cost can be reduced. Moreover, at the time of assembling the door mirror device 10 for a vehicle, damage to the visor cover 20 can be suppressed, and the defect rate of the door mirror device 10 for a vehicle can be reduced.

Further, the reinforcing plate 46 and the step portion 50 of the reinforcement 44 are fixed to the rotating body 12B of the retracting mechanism 12, and the bottom wall portion 48 of the reinforcement 44 reinforces the supporting wall 16B, the covering wall 16C and the connecting wall 16D of the visor body 16, and the fit-in pillar 48C of the bottom wall portion 48 reinforces the holding tube 26 of the visor body 16. Moreover, the supporting wall 16B, and the mirror surface adjusting mechanism 28 and the holding tube 26 that are at the interior of the covering wall 16C support the mirror body 38. Therefore, the supporting rigidity of the supporting wall 16B, the covering wall 16C, the connecting wall 16D, the holding tube 26 and the mirror surface adjusting mechanism 28 by the rotating body 12B can be increased by the reinforcement 44, and the supporting rigidity of the mirror body 38 by the rotating body 12B can be increased. Due thereto, even in a case in which the accommodating wall 16A of the visor body 16 vibrates, vibration of the supporting wall 16B, the covering wall 16C, the connecting wall 16D, the holding tube 26 and the mirror surface adjusting mechanism 28 can be suppressed, and vibration of the mirror body 38 can be suppressed.

Moreover, the reinforcing plate 46 and the step portion 50 of the reinforcement 44 are fixed to the rotating body 12B, and the rotating body 12B is reinforced. Therefore, the supporting rigidity of the supporting wall 16B, the covering wall 16C, the connecting wall 16D, the holding tube 26 and the mirror surface adjusting mechanism 28 by the rotating body 12B can be increased effectively, and the supporting rigidity of the mirror body 38 by the rotating body 12B can be increased effectively.

Further, the step portion 50 is provided at the reinforcement 44 between the reinforcing plate 46 and the bottom wall portion 48. Therefore, the rigidity of the reinforcement 44 can be effectively increased by the step portion 50, and the reinforcement 44 can effectively reinforce the rotating body 12B and the visor body 16, and the supporting rigidity of the mirror body 38 by the rotating body 12B can be increased more effectively.

Moreover, the reinforcement 44 is fixed to the rotating body 12B and the visor body 16 at the step portion 50. Therefore, the reinforcement 44 can more effectively reinforce the rotating body 12B and the visor body 16, and the supporting rigidity of the mirror body 38 by the rotating body 12B can be increased more effectively.

Further, the fit-together convex portions 50C of the step portion 50 of the reinforcement 44 are fitted together with the interiors of the fit-together concave portions 12C of the rotating body 12B. Therefore, the reinforcement 44 can reinforce the rotating body 12B more effectively, and the supporting rigidity of the mirror body 38 by the rotating body 12B can be increased more effectively.

Moreover, the step portion 50 of the reinforcement 44 is fixed to the rotating body 12B at the portions where the fit-together convex portions 50C and the fit-together concave portions 12C are fitted together. Therefore, the reinforcement 44 can reinforce the rotating body 12B more effectively, and the supporting rigidity of the mirror body 38 by the rotating body 12B can be increased more effectively.

Further, the assembly plates 48B are formed at the radial direction outer side of the bottom wall portion 48 of the reinforcement 44, and the assembly plates 48B are fixed to the visor body 16 at the bottom wall portion 48 radial direction outer sides of the wheel drives 34 and the rod drives 36 of the mirror surface adjusting mechanism 28. Therefore, the bottom wall portion 48 (including the supporting tubes 48D) can effectively limit movement of the wheel drives 34, and the supporting rigidity of the wheel drives 34 and the rod drives 36 by the bottom wall portion 48 can be increased effectively, and operation of the mirror surface adjusting mechanism 28 can be stabilized effectively.

Moreover, at the periphery of the mirror surface adjusting mechanism 28, the limiting plates 22 of the visor body 16 are inserted in the limiting holes 54 of the bottom wall portion 48, and movement of the bottom wall portion 48 in the peripheral direction and the radial direction with respect to the visor body 16 is limited. Therefore, the bottom wall portion 48 (including the supporting tubes 48D) can limit movement of the wheel drives 34 more effectively, and the supporting rigidity of the wheel drives 34 and the rod drives 36 by the bottom wall portion 48 can be increased more effectively, and operation of the mirror surface adjusting mechanism 28 can be stabilized more effectively.

Moreover, the vehicle rear side portion of the fit-together peripheral wall 48A of the bottom wall portion 48 is inserted in the outer concave portion 24 of the visor body 16, and the vehicle front side end of the supporting wall 16B of the visor body 16 is inserted in the inner concave portion 52 of the bottom wall portion 48, and the outer peripheral surface of the fit-together peripheral wall 48A is fitted together with the interior of the fit-together tube 16E of the visor body 16, and the outer peripheral surface of the supporting wall 16B is fitted together with the outer peripheral surface of the inner concave portion 52 (the inner peripheral surface of the fit-together peripheral wall 48A). Therefore, the path, over which foreign substances (e.g., water) penetrate into the covering wall 16C interior from the vehicle front side of the visor body 16 via the region between the bottom wall portion 48 and the visor body 16, can be made to be long, and penetration of foreign substances into the covering wall 16C interior can be suppressed, and penetration of foreign substances into the mirror surface adjusting mechanism 28 (the motors 30 in particular) can be suppressed.

Moreover, the rotating body 12B of the retracting mechanism 12, the visor body 16, the visor cover 20, the turn lamp 70 and the illuminating lamp 72 are assembled to the reinforcement 44 that has high rigidity. Therefore, even if dimensional errors arise at at least one of the rotating body 12B, the visor body 16, the visor cover 20, the turn lamp 70 and the illuminating lamp 72, rattling between the rotating body 12B, the visor body 16, the visor cover 20, the turn lamp 70 and the illuminating lamp 72 can be suppressed.

Further, the lead wires 56, the main connector 60, the terminals 62, the first output connector 66 and the second output connector 68 are provided integrally with the reinforcement 44. The motors 30 are electrically connected to the terminals 62, and the turn lamp 70 (the first input connector 70A) and the illuminating lamp 72 (the second input connector 72A) are electrically connected to the first output connector 66 and the second output connector 68, respectively. Therefore, it is possible to eliminate the need to electrically connect the main connector 60, to the motors 30, the turn lamp 70 and the illuminating lamp 72 by harnesses that are separated from the reinforcement 44. Due thereto, the need to route the harnesses can be eliminated, and the number of assembly processes of the door mirror device 10 for a vehicle can be reduced. Moreover, clattering of the harnesses can be eliminated, and the generation of abnormal noise can be suppressed, and disconnection of the lead wires 56 can be suppressed.

Moreover, the partitioning walls 58 and the suppressing walls 64 are provided integrally with the reinforcement 44 so as to project outward therefrom. The partitioning walls 58 cover the upper sides of the exposed portions 56A of the lead wires 56, and the suppressing walls 64 cover the upper sides and the vehicle transverse direction both sides of the exposed portions of the terminals 62 which exposed portions are exposed from the reinforcement 44. Therefore, water reaching the exposed portions 56A of the lead wires 56 can be suppressed by the partitioning walls 58, and water reaching these exposed portions of the terminals 62 can be suppressed by the suppressing walls 64, and the exposed portions 56A of the lead wires 56 and these exposed portions of the terminals 62 can be protected.

Moreover, the partitioning walls 58 are disposed between the exposed portions 56A of the lead wires 56. Therefore, water connecting the exposed portions 56A of the lead wires 56 can be suppressed, and the exposed portions 56A of the lead wires 56 becoming electrically connected to one another can be suppressed.

Further, the illuminating lamp 72 is disposed further toward the vehicle transverse direction outer side (the bottom wall portion 48 side) than the step portion 50 of the reinforcement 44. Therefore, it is possible to eliminate the need to separately provide space for placement of the illuminating lamp 72, and the door mirror device 10 for a vehicle can be made to be compact in the vehicle longitudinal direction.

### [Second Embodiment]

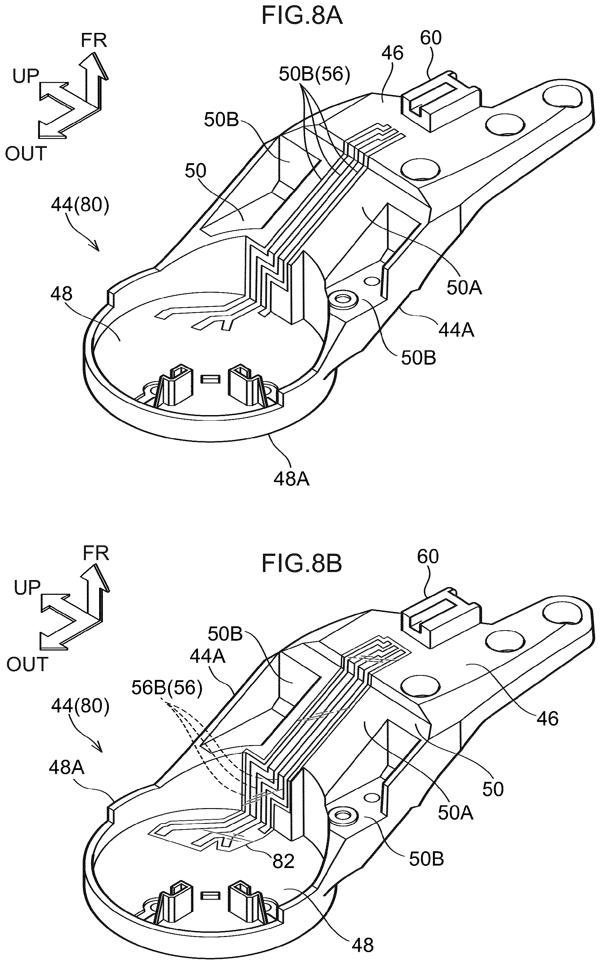

The reinforcement 44 of a door mirror device 80 for a vehicle, which serves as a viewing device for a vehicle relating to a second embodiment of the present invention, is shown in Fig. 8B in a perspective view seen from the vehicle front side and the vehicle transverse direction outer side (the vehicle right side).

The door mirror device 80 relating to the present embodiment has a structure that is substantially similar to that of the above-described first embodiment, but differs with regard to the following points.

As shown in Fig. 8B, at the door mirror device 80 for a vehicle relating to the present embodiment, at portions of the reinforcing plate 46 and the step portion 50 of the reinforcement 44, the reinforcing peripheral wall 44A projects out toward at least one of the vehicle front side and the vehicle rear side with respect to the inner side portions of the reinforcing plate 46 and the step portion 50. At the step portion 50 of the reinforcement 44, the vehicle transverse direction inner side wall of the intermediate step portion 50A extends in a direction heading toward the vehicle rear side while heading toward the vehicle transverse direction outer side. The vehicle transverse direction inner side walls of the end step portions 50B are disposed orthogonally to the vehicle transverse direction, and the vehicle transverse direction outer side walls of the end step portions 50B extend in a direction heading toward the vehicle rear side while heading toward the vehicle transverse direction outer side. Note that, in Fig. 8B, illustration of the assembly plates 48B, the limiting holes 54, the first output connector 66 and the second output connector 68 at the bottom wall portion 48 of the reinforcement 44 is omitted.

One of the supporting tubes 48D of the reinforcement 44 (the bottom wall portion 48), ones of the wheel drives 34 and rod drives 36 of the mirror surface adjusting mechanism 28, and one of the rotating walls 42C of the mirror body 38 (the mirror holder 42), are disposed below the central axis of the supporting wall 16B, instead of above the central axis of the supporting wall 16B of the visor body 16. Moreover, one pair of the terminals 62 of the reinforcement 44 (the bottom wall portion 48) and one of the motors 30 of the mirror surface adjusting mechanism 28 are disposed above the central axis of the supporting wall 16B, instead of below the central axis of the supporting wall 16B. Further, the partitioning walls 58 are not provided at the step portion 50 (the intermediate step portion 50A) of the reinforcement 44, and the suppressing walls 64 are not provided at the bottom wall portion 48 of the reinforcement 44.

Plural lead wires 56 (hereinafter called "external lead wires 56B"), which are electrically connected to the respective pairs of terminals 62 at the reinforcement 44, are formed at the vehicle front side surface of the reinforcement 44. The external lead wires 56B extend from the reinforcing plate 46 (the main connector 60) at the reinforcement 44 via the intermediate step portion 50A of the step portion 50 to the bottom wall portion 48 (the respective pairs of terminals 62).

A film 82, which is film-like and is made of resin and serves as an inhibiting portion, is affixed to the vehicle front side of the reinforcement 44. The film 82 covers the entire vehicle front sides of and the entire peripheries of the respective external lead wires 56B so as to make them water impermeable.

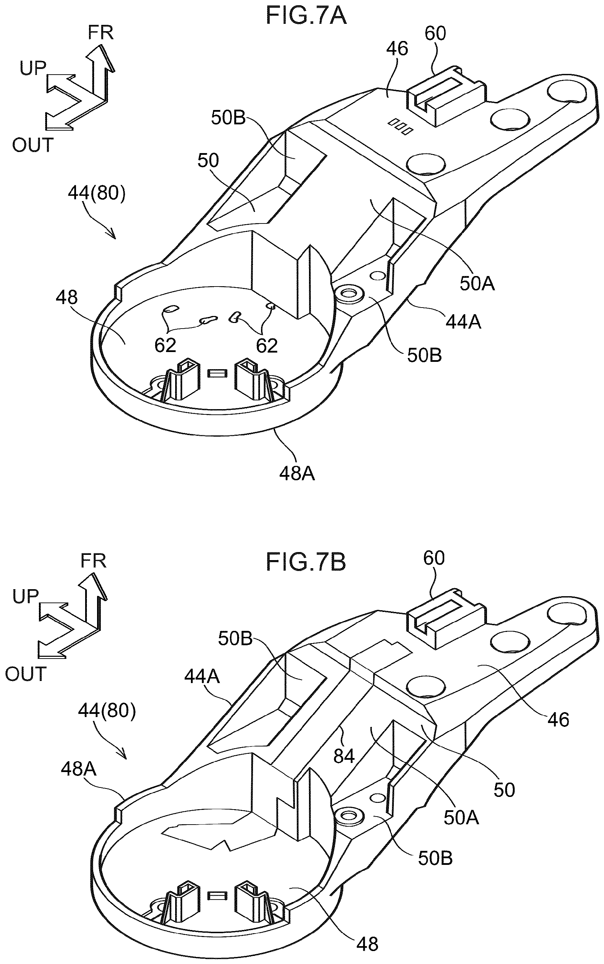

At the time when the reinforcement 44 is manufactured, first, as shown in Fig. 7B, a conductor 84 that is strip-shaped is formed by printing on the vehicle front side surface of the reinforcement 44 shown in Fig. 7A, from the reinforcing plate 46 (the main connector 60) via the intermediate step portion 50A to the bottom wall portion 48 (the respective pairs of terminals 62). Next, as shown in Fig. 8A, portions of the conductor 84 except for the respective external lead wires 56B are removed by etching or the like, and the respective external lead wires 56B that are shaped as narrow strips are formed. Finally, as shown in Fig. 8B, the film 82 is affixed to the vehicle front side of the reinforcement 44.

Here, at the door mirror device 80 for a vehicle relating to the present embodiment as well, operation and effects that are similar to those of the above-described first embodiment can be achieved.

In particular, the film 82 is affixed to the vehicle front side of the reinforcement 44, and the film 82 covers the entire vehicle front sides of and the entire peripheries of the respective external lead wires 56B of the reinforcement 44. Therefore, water reaching the respective external lead wires 56B can be limited by the film 82, and the respective external lead wires 56B can be protected.

Moreover, the film 82 is disposed between the external lead wires 56B (in particular, is affixed to the reinforcement 44 between the external lead wires 56B). Therefore, water connecting the external lead wires 56B can be suppressed, and the external lead wires 56B becoming electrically connected to one another can be suppressed.

Note that, in the present embodiment, after the conductor 84 is printed on the reinforcement, the portions of the conductor 84 other than the external lead wires 56B are removed, and the external lead wires 56B are formed. However, a conductive paint may be applied to the reinforcement 44, and the external lead wires 56B may be formed by this conductive paint.

Further, in the present embodiment, after the external lead wires 56B are formed on the reinforcement 44, the film 82 is affixed to the external lead wire 56B portions of the reinforcement 44. However, after the external lead wires 56B are formed (e.g., printed) on the film 82, the external lead wire 56B side of the film 82 (a conductive film) may be affixed to (the external lead wires 56B may be transferred onto) the reinforcement 44.

Moreover, in the above-described first embodiment and second embodiment, the partitioning walls 58 and the suppressing walls 64 or the film 82 are provided at the reinforcement 44. However, for example, in the case of a structure in which water does not reach the reinforcement 44, the partitioning walls 58, the suppressing walls 64 and the film 82 do not have to be provided at the reinforcement 44.

Further, in the above-described first embodiment and second embodiment, the supporting wall 16B and the covering wall 16C are made integral with the accommodating wall 16A. However, at least one of the supporting wall 16B and the covering wall 16C may be made to be a body separate from the accommodating wall 16A.

Moreover, in the above-described first embodiment and second embodiment, there may be provided a detecting mechanism (a memory unit, an electric mechanism) that, due to electric power being supplied thereto, for example, detects the moved positions of the rod drives 36 and detects the tilted position of the mirror body 38. In this case, for example, the detecting mechanism may be assembled to the reinforcement 44 (in particular, the vehicle front side of the bottom wall portion 48), and the detecting mechanism may be electrically connected to the lead wires 56 of the reinforcement 44.

Further, in the above-described first embodiment and second embodiment, the mirror body 38 is made to be the viewing means. However, a camera that assists viewing by the vehicle occupant by capturing images may be made to be the viewing means. In this case, the camera may be electrically connected to the lead wires 56 of the reinforcement 44.

Moreover, in the above-described first embodiment and second embodiment, the door mirror device 10 for a vehicle (the viewing device for a vehicle) is set at the outer side of a door of the vehicle. However, the viewing device for a vehicle may be set at another position of the vehicle.

### [Explanation of Reference Numerals]

- 10: door mirror device for vehicle (viewing device for vehicle)
- 12: retracting mechanism
- 16: visor body (accommodating body)
- 22: limiting plate (limiting portion)
- 24: outer concave portion (concave portion)
- 28: mirror surface adjusting mechanism (operating mechanism)
- 36: rod drive (moving member)
- 38: mirror body (viewing means)
- 44: reinforcement (reinforcing body)
- 50: step portion
- 50C: fit-together convex portion (fit-together portion)
- 52: inner concave portion (concave portion)
- 56: lead wire (wire)
- 58: partitioning wall (inhibiting portion)
- 62: terminal (wire)
- 64: suppressing wall (inhibiting portion)
- 70: turn lamp (electric mechanism)
- 72: illuminating lamp (electric mechanism)
- 80: door mirror device for vehicle (viewing device for vehicle)
- 82: film (inhibiting portion)

## Claims

1. A viewing device (10) for a vehicle, comprising:
viewing means (38) for assisting viewing by a vehicle occupant;
an operating mechanism (28) that is operable to tilt the viewing means (38);
an accommodating body (16) that accommodates the viewing means (38);
a covering portion (16C) that is provided at a viewing means (38) side of the accommodating body (16); and
a reinforcing body (44) that is fixed to an opposite side, from the viewing means (38), of the accommodating body (16), that reinforces the accommodating body (16), and that is provided with a bottom wall portion (48) which covers an opposite side, from the viewing means (38), of the operating mechanism (28) such that the operating mechanism (28) is held between the covering portion (16C) and the bottom wall portion (48).

2. The viewing device (10) for a vehicle of Claim 1, further comprising a retracting mechanism (12) that is fixed to, and reinforced by, the reinforcing body (44), and that is operable to retract the viewing means (38).

3. The viewing device (10) for a vehicle of Claim 2, further comprising a fit-together portion (50C) that is provided at the reinforcing body (44) and is fitted together with the retracting mechanism (12).

4. The viewing device (10) for a vehicle of Claim 3, wherein the reinforcing body (44) is fixed to the retracting mechanism (12) at the fit-together portion (50C).

5. The viewing device (10) for a vehicle of any one of Claim 1 through Claim 4, further comprising a step portion (50) that is provided at the reinforcing body (44), and that forms, at the reinforcing body (44), a side of portion at the viewing means (38) and a portion at an opposite side from the viewing means (38).

6. The viewing device (10) for a vehicle of Claim 5, wherein the reinforcing body (44) is fixed to the accommodating body (16) at the step portion (50).

7. The viewing device (10) for a vehicle of Claim 5 or Claim 6, further comprising an electric mechanism (70) that is disposed further toward a side of the portion at the side of the viewing means (38) than the step portion (50) of the reinforcing body (44), and to which electric power is supplied.

8. The viewing device (10) for a vehicle of any one of Claim 1 through Claim 7, further comprising a moving member (36) that is provided at the operating mechanism (28), and that is movable to tilt the viewing means (38), the reinforcing body (44) being fixed to the accommodating body (16) at a side of the moving member (36).

9. The viewing device (10) for a vehicle of any one of Claim 1 through Claim 8, further comprising a limiting portion (22) that is provided at the accommodating body (16) at a side of the operating mechanism (28), and that limits movement of the reinforcing body (44).

10. The viewing device (10) for a vehicle of any one of Claim 1 through Claim 9, further comprising a concave portion (24) that is provided at at least one of the accommodating body (16) or the reinforcing body (44) at a periphery of the operating mechanism (28), and into which the accommodating body (16) or the reinforcing body (44) is inserted.

11. The viewing device (10) for a vehicle of any one of Claim 1 through Claim 10, further comprising a wire (56) that is provided at the reinforcing body (44) and that supplies electric power.

12. The viewing device (10) for a vehicle of Claim 11, further comprising an electric mechanism (70) that is electrically connected to the wire (56) and to which electric power is supplied.

13. The viewing device (10) for a vehicle of Claim 11 or Claim 12, further comprising an inhibiting portion (64; 82) that is provided at the reinforcing body (44) so as to project outward, and that inhibits water from reaching an exposed portion (56A) of the wire (56), the exposed portion (56A) being exposed from the reinforcing body (44).

14. The viewing device (10) for a vehicle of Claim 13, wherein the inhibiting portion (64; 82) is disposed between exposed portions (56A) of the wire (56), the exposed portions (56A) being exposed from the reinforcing body (44).

## Patentansprüche

1. Betrachtungsvorrichtung (10) für ein Fahrzeug, die Folgendes aufweist:
eine Betrachtungseinrichtung (38) zur Erleichterung der Betrachtung durch einen Fahrzeuginsassen;
einen Betätigungsmechanismus (28), der zum Kippen der Betrachtungseinrichtung (38) betriebsfähig ist;
einen Aufnahmekörper (16), der die Betrachtungseinrichtung (38) aufnimmt;
einen Abdeckabschnitt (16C), der an einer Betrachtungseinrichtungsseite des Aufnahmekörpers (16) vorgesehen ist; und
einen Verstärkungskörper (44), der an einer gegenüberliegenden Seite des Aufnahmekörpers (16) von der Betrachtungseinrichtung (38) aus befestigt ist, der den Aufnahmekörper (16) verstärkt, und der mit einem Bodenwandabschnitt (48) versehen ist, der eine gegenüberliegende Seite des Betätigungsmechanismus (28) von der Betrachtungseinrichtung (38) aus abdeckt, so dass der Betätigungsmechanismus (28) zwischen dem Abdeckabschnitt (16C) und dem Bodenwandabschnitt (48) gehalten wird.

2. Betrachtungsvorrichtung (10) für ein Fahrzeug nach Anspruch 1, ferner mit einem Einziehmechanismus (12), der an dem Verstärkungskörper (44) befestigt und durch diesen verstärkt ist und der zum Einziehen der Betrachtungseinrichtung (38) betriebsfähig ist.

3. Betrachtungsvorrichtung (10) für ein Fahrzeug nach Anspruch 2, ferner mit einem zusammenpassenden Abschnitt (50C), der an dem Verstärkungskörper (44) vorgesehen ist und mit dem Einziehmechanismus (12) zusammengefügt ist.

4. Betrachtungsvorrichtung (10) für ein Fahrzeug nach Anspruch 3, wobei der Verstärkungskörper (44) an dem Einziehmechanismus (12) am zusammenpassenden Abschnitt (50C) befestigt ist.

5. Betrachtungsvorrichtung (10) für ein Fahrzeug nach einem der Ansprüche 1 bis 4, ferner mit einem Stufenabschnitt (50), der an dem Verstärkungskörper (44) vorgesehen ist und der an dem Verstärkungskörper (44) eine Seite des Abschnitts an der Betrachtungseinrichtung (38) und einen Abschnitt an einer gegenüberliegenden Seite der Betrachtungseinrichtung (38) bildet.

6. Betrachtungsvorrichtung (10) für ein Fahrzeug nach Anspruch 5, wobei der Verstärkungskörper (44) an dem Aufnahmekörper (16) am Stufenabschnitt (50) befestigt ist.

7. Betrachtungsvorrichtung (10) für ein Fahrzeug nach Anspruch 5 oder Anspruch 6, ferner mit einem elektrischen Mechanismus (70), der weiter in Richtung einer Seite des Abschnitts an der Seite der Betrachtungseinrichtung (38) als der Stufenabschnitt (50) des Verstärkungskörpers (44) angeordnet ist und zu dem Strom zugeführt wird.

8. Betrachtungsvorrichtung (10) für ein Fahrzeug nach einem der Ansprüche 1 bis 7, ferner mit einem beweglichen Bauteil (36), das am Antriebsmechanismus (28) vorgesehen ist und das zum Kippen der Betrachtungseinrichtung (38) beweglich ist, wobei der Verstärkungskörper (44) an dem Aufnahmekörper (16) auf einer Seite des beweglichen Bauteils (36) befestigt ist.

9. Betrachtungsvorrichtung (10) für ein Fahrzeug nach einem der Ansprüche 1 bis 8, ferner umfassend einen Begrenzungsabschnitt (22), der an dem Aufnahmekörper (16) an einer Seite des Antriebsmechanismus (28) vorgesehen ist und die Bewegung des Verstärkungskörpers (44) begrenzt.

10. Betrachtungsvorrichtung (10) für ein Fahrzeug nach einem der Ansprüche 1 bis 9, ferner mit einem konkaven Abschnitt (24), der an mindestens einem von dem Aufnahmekörper (16) oder dem Verstärkungskörper (44) an einer Peripherie des Antriebsmechanismus (28) vorgesehen ist und in den der Aufnahmekörper (16) oder der Verstärkungskörper (44) eingesetzt ist.

11. Betrachtungsvorrichtung (10) für ein Fahrzeug nach einem der Ansprüche 1 bis 10, ferner mit einem Draht (56), der an dem Verstärkungskörper (44) vorgesehen ist und Strom zuführt.

12. Betrachtungsvorrichtung (10) für ein Fahrzeug nach Anspruch 11, ferner mit einem elektrischen Mechanismus (70), der elektrisch mit dem Draht (56) verbunden ist und zu dem Strom zugeführt wird.

13. Sichtvorrichtung (10) für ein Fahrzeug nach Anspruch 11 oder Anspruch 12, ferner mit einem Verhinderungsabschnitt (64; 82), der an dem Verstärkungskörper (44) vorgesehen ist, um nach außen vorzuragen, und der verhindert, dass Wasser einen freiliegenden Abschnitt (56A) des Drahtes (56) erreicht, wobei der freiliegende Abschnitt (56A) von dem Verstärkungskörper (44) freiliegt.

14. Betrachtungsvorrichtung (10) für ein Fahrzeug nach Anspruch 13, wobei der Verhinderungsabschnitt (64; 82) zwischen freiliegenden Abschnitten (56A) des Drahtes (56) angeordnet ist, wobei die freiliegenden Abschnitte (56A) von dem Verstärkungskörper (44) freiliegen.

## Revendications

1. Dispositif de visualisation (10) pour un véhicule comprenant :
un moyen de visualisation (38) pour aider la visualisation par un occupant de véhicule ;
un mécanisme de commande (28) qui est opérationnel pour incliner le moyen de visualisation (38) ;
un corps de logement (16) pour loger le moyen de visualisation (38) ;
une partie de recouvrement (16C) qui est prévue du côté d'un moyen de visualisation (38) du corps de logement (16) ; et
un corps de renforcement (44) qui est fixé sur un côté opposé, à partir du moyen de visualisation (38), du corps de logement (16), qui renforce le corps de logement (16), et qui est prévu avec une partie de paroi inférieure (48) qui recouvre un côté opposé, à partir du moyen de visualisation (38), du mécanisme de commande (28) de sorte que le mécanisme de commande (28) est maintenu entre la partie de recouvrement (16C) et la partie de paroi inférieure (48).

2. Dispositif de visualisation (10) pour un véhicule selon la revendication 1, comprenant en outre un mécanisme de rétraction (12) qui est fixé sur et renforcé par le corps de renforcement (44) et qui est opérationnel pour rétracter le moyen de visualisation (38).

3. Dispositif de visualisation (10) pour un véhicule selon la revendication 2, comprenant en outre une partie d'emboîtement (50C) qui est prévue au niveau du corps de renforcement (44) et est emboîtée avec le mécanisme de rétraction (12).

4. Dispositif de visualisation (10) pour un véhicule selon la revendication 3, dans lequel le corps de renforcement (44) est fixé sur le mécanisme de rétraction (12) au niveau de la partie d'emboîtement (50C).

5. Dispositif de visualisation (10) pour un véhicule selon l'une quelconque des revendications 1 à 4, comprenant en outre une partie de gradin (50) qui est prévue au niveau du corps de renforcement (44) et qui forme, au niveau du corps de renforcement (44), un côté de partie au niveau du moyen de visualisation (38) et une partie au niveau d'un côté opposé au moyen de visualisation (38).

6. Dispositif de visualisation (10) pour un véhicule selon la revendication 5, dans lequel le corps de renforcement (44) est fixé sur le corps de logement (16) au niveau de la partie de gradin (50).

7. Dispositif de visualisation (10) pour un véhicule selon la revendication 5 ou la revendication 6, comprenant en outre un mécanisme électrique (70) qui est disposé davantage vers un côté de la partie du côté du moyen de visualisation (38) que la partie de gradin (50) du corps de renforcement (44) et auquel l'énergie électrique est fournie.

8. Dispositif de visualisation (10) pour un véhicule selon l'une quelconque des revendications 1 à 7, comprenant en outre un élément de déplacement (36) qui est prévu au niveau du mécanisme de commande (28) et qui est mobile pour incliner le moyen de visualisation (38), le corps de renforcement (44) étant fixé sur le corps de logement (16) d'un côté de l'élément de déplacement (36).

9. Dispositif de visualisation (10) pour un véhicule selon l'une quelconque des revendications 1 à 8, comprenant en outre une partie de limitation (22) qui est prévue au niveau du corps de logement (16) du côté du mécanisme de commande (28), et qui limite le déplacement du corps de renforcement (44) .

10. Dispositif de visualisation (10) pour un véhicule selon l'une quelconque des revendications 1 à 9, comprenant en outre une partie concave (24) qui est prévue au niveau d'au moins l'un parmi le corps de logement (16) ou le corps de renforcement (44) au niveau d'une périphérie du mécanisme de commande (28) et dans lequel le corps de logement (16) ou le corps de renforcement (44) est inséré.

11. Dispositif de visualisation (10) pour un véhicule selon l'une quelconque des revendications 1 à 10, comprenant en outre un fil (56) qui est prévu au niveau du corps de renforcement (44) et qui fournit l'énergie électrique.

12. Dispositif de visualisation (10) pour un véhicule selon la revendication 11, comprenant en outre un mécanisme électrique (70) qui est électriquement raccordé au fil (56) et auquel l'énergie électrique est fournie.

13. Dispositif de visualisation (10) pour un véhicule selon la revendication 11 ou la revendication 12, comprenant en outre une partie d'inhibition (64 ; 82) qui est prévue au niveau du corps de renforcement (44) afin de faire saillie vers l'extérieur et qui empêche l'eau d'atteindre une partie exposée (56A) du fil (56), la partie exposée (56A) étant exposée à partir du corps de renforcement (44).

14. Dispositif de visualisation (10) pour un véhicule selon la revendication 13, dans lequel la partie d'inhibition (64 ; 82) est disposée entre des parties exposées (56A) du fil (56), les parties exposées (56A) étant exposées à partir du corps de renforcement (44).
